# FASCICULE DE BREVET EUROPEEN

(11) **EP 0 275 779 B1**
(45) Date de publication et mention de la délivrance du brevet: **04.05.1994**
(21) Numéro de dépôt: 87402958.0
(22) Date de dépôt: 22.12.1987
(51) Int. Cl.: H02H 7/26, H02H 3/05

(54) **Dispositif à relais directionnels de plusieurs types**
Gerichtete Schutzrelaiseinrichtung, bestehend aus mehreren Typen
Directional relay protective device consisting of several types

(30) Priorité: 22.01.1987 FR 8700721
(43) Date de publication de la demande: 27.07.1988
(73) Titulaire: GEC ALSTHOM PROTECTION & CONTROLE, 92120 Montrouge (FR)
(72) Inventeur: Souillard, Michel, F-92260 Fontenay Aux Roses (FR)
(74) Mandataire: Weinmiller, Jürgen, Dipl.-Ing.

(56) Documents cités:
- DE-A- 2 039 496
- GB-A- 2 036 477
- US-A- 4 484 245

## Description

La présente invention concerne un dispositif pour la protection d'un élément de réseau électrique à deux extrêmités, comprenant au moins :
- deux systèmes de protection respectivement affectés à ces extrêmités et dont chacun comprend d'une part au moins un relais directionnel et d'autre part au moins un organe de transmission comportant lui-même un émetteur relié à ce relais directionnel, et
- un canal de transmission reliant les deux organes de transmission, chaque relais directionnel étant utilisé pour établir une discrimination entre d'éventuels défauts, dits "aval", qui sont susceptibles d'affecter ledit élément de réseau ou toute portion de réseau s'étendant au delà de l'extrêmité de l'élément protégé qui est la plus éloignée de ce relais, et d'autres éventuels défauts dits "amont", et étant susceptible à cette fin d'adopter au moins un premier état, indiquant un défaut amont, et un second état, indiquant un défaut aval, chaque émetteur adoptant un état de commande de validation ou un état de commande d'invalidation selon l'état adopté par au moins un relais auquel il est relié, et chaque système de protection étant susceptible de délivrer un signal de déclenchement pour effectuer une isolation électrique au moins partielle dudit élément de réseau, sauf s'il en est empêché par un état de commande d'invalidation de l'émetteur de l'autre système.

Les dispositifs de ce type sont bien connus et largement utilisés de nos jours, notamment pour la protection des conducteurs (appelés "phases") des lignes de transport d'énergie électrique polyphasée.

Des exemples de dispositifs de ce genre sont donnés dans les brevets US 4 484 245, US 3 651 377 et US 4 251 766.

Un problème très ancien rencontré dans la conception de dispositifs de protection de lignes électriques réside dans la grande dépendance du comportement de ces dispositifs, c'est-à-dire de l'état qu'ils adoptent à l'apparition d'un défaut, à la fois vis-à-vis de la configuration de la ligne à protéger, c'est-à-dire de la structure physique de cette ligne (ligne simple ou ligne double) et de la répartition des impédances électriques le long de et au delà des extrêmités de cette ligne, et vis-à-vis de la nature du défaut lui-même.

Pour tenter de pallier ce problème, on s'est jusqu'à présent efforcé de développer des relais directionnels en les adaptant à la configuration de l'élément de réseau à protéger.

C'est ainsi qu'il existe aujourd'hui de nombreux types de relais directionnels, et notamment des relais dits "d'impédance amont" (parmi lesquels on trouve les relais directionnels utilisant les composantes homopolaires, inverses ou directes de transition), les relais dits "d'impédance totale", les relais directionnels dits "d'impédance aval" (parmi lesquels on trouve des relais directionnels pour défauts entre phase et terre et des relais directionnels pour défauts entre phases) et des relais dits "composites" en raison de ce qu'ils combinent des informations relatives à l'état électrique de composantes de natures différentes.

L'adaptation du dispositif de protection à la configuration de la ligne à protéger consiste donc, de façon conventionnelle, à choisir, en fonction de cette configuration, le type de relais le plus approprié, et à effectuer sur les relais choisis tous les réglages dont ils offrent la possibilité.

Il apparaît cependant, quels que soient les choix réalisés, qu'il existe des configurations de lignes et de défauts dans lesquelles l'élaboration d'une information directionnelle pose des problèmes incompatibles avec la nécessité absolue de ne pas opérer de déclenchements intempestifs, (c'est-à-dire la nécessité de ne pas isoler électriquement une ligne qui, en fait, est saine), et de ne pas manquer un déclenchement, (c'est-à-dire la nécessité d'isoler une ligne qui est réellement en défaut).

Par exemple, il existe des cas dans lesquels les signaux de traitement utilisés par les relais directionnels ont une amplitude si faible que ces derniers ne peuvent opérer une quelconque discrimination dans la direction du défaut.

Dans d'autres cas, en particulier dans le cas de lignes doubles dont l'un des éléments est en défaut, l'information directionnelle délivrée par un relais d'un certain type sur l'élément non affecté par le défaut est contradictoire avec celle qui serait délivrée par un relais d'un autre type.

Dans ce contexte, la présente invention, qui repose sur la mise en évidence de ce que les informations délivrées par des relais de plusieurs types, bien qu'éventuellement contradictoires, peuvent être combinées, a pour but de réduire encore, si ce n'est faire totalement disparaître, les hypothèses dans lesquelles une information directionnelle ne peut être fournie, sans toutefois augmenter pour autant le nombre de canaux de transmission d'information nécessaires pour relier les organes de transmission des systèmes de protection installés aux deux extrêmités de la ligne protégée.

A cette fin, le dispositif de l'invention, destiné à la protection d'un élément de réseau électrique à deux extrémités, et comprenant au moins :
- deux systèmes de protection respectivement affectés à ces extrémités et dont chacun comprend d'une part au moins un relais directionnel et d'autre part au moins un organe de transmission comprenant lui même un émetteur relié à ce relais directionnel, et
- un canal de transmission reliant les deux organes de transmission, chaque relais directionnel étant utilisé pour établir une discrimination entre d'éventuels défauts, dits "aval", qui sont susceptibles d'affecter ledit élément de réseau ou toute portion de réseau s'étendant au delà de l'extrémité de l'élément protégé qui est la plus éloignée de ce relais, et d'autres éventuels défauts dits "amont", et étant susceptible à cette fin d'adopter au moins un premier état, indiquant un défaut amont, et un second état, indiquant un défaut aval, chaque émetteur adoptant un état de commande de validation ou un état de commande d'invalidation selon l'état adopté par au moins un relais auquel il est relié, et chaque système de protection étant susceptible de délivrer un signal de déclenchement pour effectuer une isolation électrique au moins partielle dudit élément de réseau, sauf s'il en est empêché par un état de commande d'invalidation de l'émetteur de l'autre système, est essentiellement caractérisé en ce que l'un au moins des systèmes de protection comprend, pour la détection du même défaut, des relais directionnels d'au moins deux types, reliés à un même émetteur par un circuit logique propre à placer cet émetteur dans son état de commande d'invalidation lorsque l'un au moins de ces relais se trouve dans son premier état, en ce que, dans le cas d'un dispositif utilisant un principe de protection à autorisation, c'est-à-dire selon lequel au moins un émetteur émet un signal d'autorisation lorsqu'il adopte son état de commande de validation et s'abstient d'émettre un signal d'autorisation lorsqu'il adopte son état de commande d'invalidation, le circuit logique reliant lesdits relais de plusieurs types à cet émetteur est propre à ne placer cet émetteur dans son état de commande de validation que si l'un au moins de ces relais est dans son second état et si, en même temps, aucun de ces relais n'est dans son premier état, et dans le cas d'un dispositif utilisant un principe de protection à blocage, c'est-à-dire selon lequel au moins un émetteur émet un signal de blocage lorsqu'il adopte son état de commande d'invalidation et s'abstient d'émettre un signal de blocage lorsqu'il adopte son état de commande de validation, le circuit logique reliant lesdits relais de plusieurs types à cet émetteur comprend un circuit de temporisation propre à placer l'émetteur dans son état de commande d'invalidation pendant un intervalle de temps prédéterminé à compter du premier instant où l'un de ces relais se place dans son premier état, et en ce que le circuit logique de chaque système de protection à relais de plusieurs types comporte des moyens pour élaborer ledit signal de déclenchement si, à la fois, l'émetteur de l'autre système n'est pas en état de commande d'invalidation, si aucun des relais du système de protection concerné n'est dans son premier état, et si l'un au moins de ces relais est dans son second état.

Dans le dispositif de l'invention, dans lequel, de façon traditionnelle, chaque relais reçoit des signaux de mesure représentatifs de l'état électrique dudit élément de réseau à l'extrémité de celui-ci à laquelle ce relais est affecté, dans lequel chaque relais élabore une combinaison de ces signaux pour effectuer ladite discrimination entre les défauts amont et aval, et dans lequel chaque relais ne peut adopter son premier état si ladite combinaison de signaux est inférieure à un premier seuil, ni adopter son second état si cette même combinaison de signaux est inférieure à un second seuil, le second seuil est de préférence réglé de manière à être supérieur au premier seuil.

D'autres caractéristiques et avantages de l'invention ressortiront de la description qui en est faite ci-après, à titre indicatif et nullement limitatif, en référence aux dessins annexés, dans lesquels :
- la figure 1 est un schéma d'agencement de dispositifs de protection directionnelle sur une ligne double;
- la figure 2 est un schéma d'un système de protection directionnelle conforme à l'invention; et
- la figure 3 est un schéma d'un autre système de protection directionnelle conforme à l'invention.

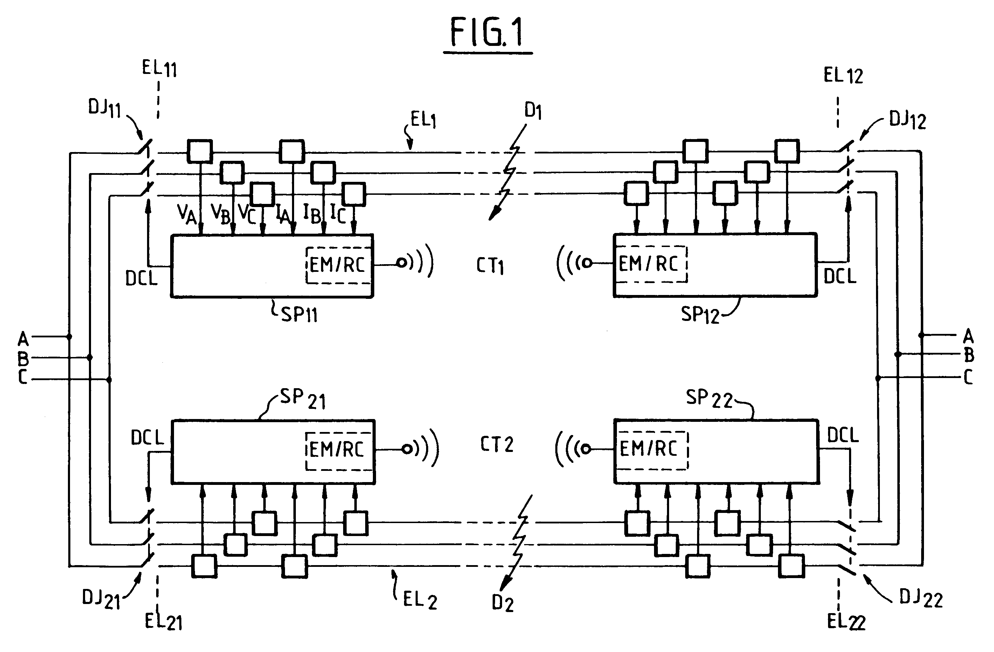

La figure 1 représente une ligne double de transport d'énergie électrique, formée de deux éléments EL₁ et EL₂, branchés en parallèle et dont chacun comprend trois conducteurs A, B et C.

La ligne est protégée par des disjoncteurs DJ₁₁, DJ₁₂, DJ₂₁, et DJ₂₂ placés aux extrémités EL₁₁, EL₁₂, EL₂₁ et EL₂₂ des éléments de lignes EL₁ et EL₂.

Des transformateurs de tension et des transformateurs de courant, installés aux extrémités des éléments de ligne EL₁, et EL₂, délivrent respectivement des signaux de mesure de tension, tels que V_{A}, V_{B}, V_{C}, et des signaux de mesure de courant, tels que I_{A}, I_{B}, I_{C}, représentatifs de l'état électrique des différents conducteurs A, B, C aux différents points d'installation de ces transformateurs.

Ces signaux de mesure V_{A}, V_{B}, V_{C}, I_{A}, I_{B}, I_{C}, ou au moins certains d'entre eux, sont acheminés vers des systèmes de protection directionnelle tels que SP₁₁, SP₁₂, SP₂₁, et SP₂₂.

Ces derniers fonctionnent par paires, les systèmes SP₁₁ et SP₁₂ formant le dispositif de protection directionnelle de l'élément EL₁ et les systèmes SP₂₁ et SP₂₂ formant le dispositif de protection directionnelle de l'élément EL₂.

Chaque système de protection, tel que SP₁₁, comprend traditionnellement un relais directionnel et, selon l'invention, au moins deux relais directionnels de deux types différents. Chaque système de protection comprend en outre un organe de transmission, dont la présence est sur la figure 1 symbolisé par une antenne, cet organe de transmission comprenant lui-même un émetteur relié au(x) relais directionnel(s) du système de protection concerné.

Chaque dispositif de protection, tel que SP₁₁-SP₂₁ ou SP₂₁-SP₂₂, comprend enfin un canal de transmission, par exemple un canal hertzien, tel que CT₁ ou CT₂, permettant une transmission d'information entre les systèmes de protection SP₁₁ et SP₁₂, ou SP₂₁ et SP₂₂.

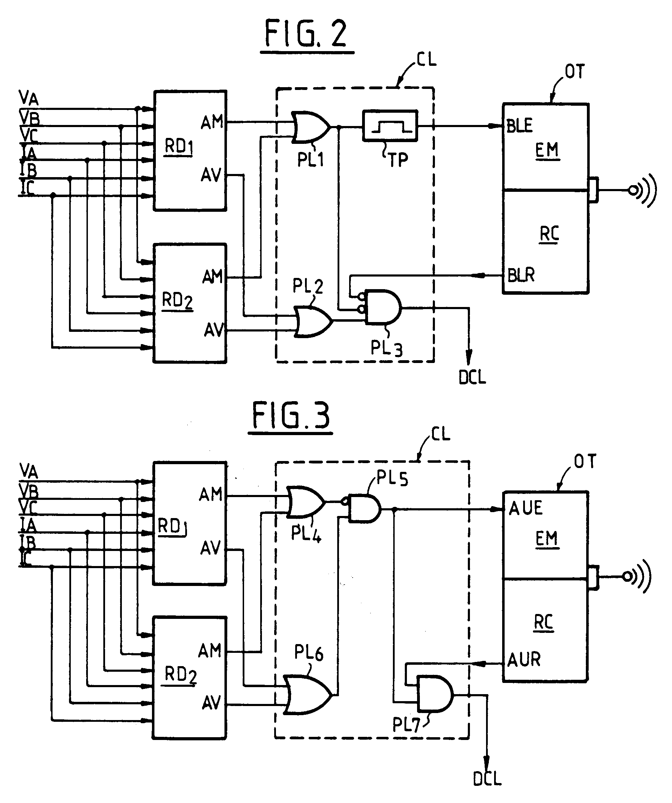

Chaque relais directionnel, tel que RD₁, ou RD₂ (figure 2 ou 3), installé dans chaque système de protection, a pour fonction d'établir une discrimination entre d'éventuels défauts qu'on dénomme "amont", et d'autres éventuels défauts qu'on dénomme "aval".

Chaque relais directionnel de chaque système de protection peut être considéré comme un observateur tourné vers le système de protection associé à celui dans lequel ce relais se trouve; par exemple, les relais du système SP₁₁ scrutent la direction qui pointe vers le système SP₁₂, et réciproquement; lorsqu'un relais directionnel détecte un défaut dans la direction dans laquelle il scrute, le défaut est dit "aval"; dans le cas contraire, il est dit "amont".

Ainsi, un défaut tel que D₁ est un défaut aval pour SP₁₁ et SP₁₂, de même que le défaut D₂ est aval pour SP₂₁ et SP₂₂.

Lorsqu'un relais détecte un défaut amont, il se place dans un premier état, dans lequel il délivre un signal, tel que AM, indiquant un défaut amont; lorsqu'il détecte en revanche un défaut aval, il se place dans un second état, dans lequel il délivre un signal, tel que AV, indiquant un défaut aval.

Ce principe n'exclut pas cependant la possibilité pour un relais de se placer dans un troisième état, correspondant à une indétermination de la direction du défaut; c'est notamment le cas lorsque la combinaison des signaux tels que V_{A}, V_{B}, V_{C}, I_{A}, I_{B}, et I_{C} utilisée par le relais pour déterminer la direction du défaut a une amplitude trop faible pour que cette détermination puisse être faite.

D'autre part, le cas de la ligne double représentée sur la figure 1 montre clairement que le défaut D₂, selon sa position sur l'élément EL₂, pourra être vu comme étant "aval" par un relais du système SP₁₁ (les disjoncteurs DJ₁₁, DJ₁₂, DJ₂₁ et DJ₂₂ étant supposés fermés), à travers les extrémités EL₁₂ et EL₂₂, si ce défaut se manifeste davantage à ce relais à travers ces extrémités qu'à travers les extrémités EL₁₁ et EL₂₁, mais pourra être vu comme étant "amont" par ce même relais dans le cas contraire.

Si, comme c'est le cas conformément à l'invention, le système de protection SP₁₁ comprend des relais directionnels de plusieurs types, certains pourront voir le défaut D₂ comme amont, et d'autres comme aval, alors que, dans l'art antérieur, les systèmes de protection tels que SP₁₁ et SP₁₂ ne comportant qu'un relais directionnel, ces conflits n'existent pas.

De façon traditionnelle, les systèmes de protection tels que SP₁₁ et SP₁₂ se communiquent, par le canal de transmission CT₁, le résultat de leurs observations.

Si ces systèmes voient tous les deux un défaut comme étant "aval", le défaut est supposé affecter l'élément du réseau EL₁ comme D₁ le fait, et les systèmes tels que SP₁₁ et SP₁₂ s'autorisent mutuellement à délivrer des signaux de déclenchement respectifs DCL, qui ont pour effet d'ouvrir les disjoncteurs tels que DJ₁₁ et DJ₁₂, donc d'isoler électriquement l'élément de réseau concerné, en l'occurence EL₁.

Cette autorisation mutuelle des systèmes de protection SP₁₁ et SP₁₂ à délivrer des signaux de déclenchement peut adopter deux formes, bien connues de l'homme de l'art : soit ces systèmes sont du type de ceux qui délivrent des signaux d'autorisation, soit ils sont du type de ceux qui délivrent des signaux de blocage.

Dans le cas des systèmes de protection du type "à autorisation", chaque système tel que SP₁₁, à la détection d'un défaut aval, place son émetteur EM dans un état de commande de validation, et ce dernier adresse au système tel que SP₁₂, à travers le canal de transmission CT₁, un signal d'autorisation, que ce système reçoit grâce à son récepteur RC, et dont il a besoin pour pouvoir produire un signal de déclenchement DCL, dans le cas où lui-même voit le défaut comme étant aval.

Si SP₁₁ ne voit pas le défaut comme étant aval, il place son émetteur EM dans un état de commande d'invalidation, ce qui a pour effet que cet émetteur s'abstient d'envoyer un signal d'autorisation SP₁₂ et que ce dernier, privé d'autorisation, ne peut produire un signal de déclenchement.

La transmission d'information est bien entendu bidirectionnelle, c'est-à-dire que SP₁₂ doit aussi transmettre, ou s'abstenir de transmettre, à SP₁₁, un signal d'autorisation en cas de défaut.

Dans le cas de systèmes de protection de type "à blocage", chaque système, tel que SP₁₁, à la détection d'un défaut amont, place son émetteur EM dans un état de commande d'invalidation, et ce dernier adresse au système de protection associé, tel que SP₁₂, à travers le canal de transmission CT₁, un signal de blocage que ce système reçoit grâce à son récepteur RC et qui lui interdit de produire un signal de déclenchement DCL, même dans le cas où lui-même voit le défaut comme étant aval.

Si SP₁₁ ne voit pas le défaut comme étant amont, il place son émetteur EM dans un état de commande de validation, ce qui a pour effet que cet émetteur s'abstient d'envoyer un signal de blocage à SP₁₂ et que ce dernier, privé d'interdiction, peut produire un signal de déclenchement DCL dans le cas où il voit le défaut comme étant aval.

La transmission d'information est comme toujours bidirectionnelle, c'est-à-dire que SP₁₂ doit aussi transmettre, ou s'abstenir de transmettre, un signal de blocage à SP₁₁ en cas de défaut.

Comme indiqué précédemment, l'utilisation, préconisée par l'invention, de relais directionnels de plusieurs types dans un même système de protection tel que SP₁₁, conduit à des conflits pour la génération de signaux d'autorisation ou de blocage.

Ces conflits sont, conformément à l'invention, réglés de la façon décrite ci-après, en référence à la figure 2 qui représente un système de protection, tel que SP₁₁, de type "à blocage", utilisant par exemple deux relais directionnels différents RD₁, et RD₂, et en référence à la figure 3 qui représente un système de protection tel que SP₁₁, de type "à autorisation", utilisant également par exemple deux relais différents RD₁ et RD₂.

Les relais directionnels RD₁, et RD₂ (figure 2), et s'il en existe, les autres relais directionnels, reçoivent les signaux de mesure V_{A}, V_{B}, V_{C}, I_{A}, I_{B}, I_{C}, ou certains au moins de ces signaux, ou encore des combinaisons de ces signaux.

Ces relais RD₁, RD₂ sont conçus, de façon en soi connue, pour élaborer une combinaison de ces signaux en vue de déterminer si un défaut affectant l'élément de réseau que ce système doit protéger est amont ou aval.

Si cette combinaison de signaux a une amplitude supérieure à un premier seuil prédéterminé et fait apparaître un défaut amont, le relais concerné, tel que RD₁ ou RD₂, produit un signal AM indiquant un défaut amont; si cette combinaison de signaux a une amplitude supérieure à un second seuil prédéterminé, et fait apparaître un défaut aval, le relais concerné, tel que RD₁ ou RD₂, produit un signal AV indiquant un défaut aval; dans les autres cas, le relais est dans un état indéterminé et incapable d'indiquer si le défaut est amont ou aval.

Traditionnellement, le second seuil est supérieur au premier seuil, c'est-à-dire qu'un relais délivre plus facilement un signal amont AM qu'un signal aval AV; cette caractéristique reste avantageuse dans le cadre de l'invention, et même un peu plus que dans l'art antérieur.

Les sorties AM et AV des différents relais RD₁, RD₂, etc (figures 2 et 3) parviennent à un circuit logique CL qui relie ces relais à l'organe de transmission OT, ce dernier comprenant un émetteur EM et un récepteur RC.

Plus précisément, dans les systèmes à blocage (figure 2), les sorties AM des différents relais RD₁, RD₂, parviennent à l'entrée d'une porte logique OU PL1 dont la sortie est reliée, à travers un circuit de temporisation TP à une entrée BLE de l'émetteur EM.

Les sorties AV des différents relais RD₁ RD₂, parviennent à l'entrée d'une porte logique OU PL2 dont la sortie est reliée à une entrée directe d'une porte logique ET PL3.

Cette dernière porte PL3 reçoit en outre, sur une entrée inversée, le signal de sortie de la porte PL1 et, sur une autre entrée inversée, un signal BLR délivré par le récepteur RC. La porte ET PL3 est susceptible de délivrer à sa sortie un signal de déclenchement DCL.

Le fonctionnement du système de la figure 2 est le suivant :
Si l'un au moins des relais RD₁, RD₂, etc, délivre un signal amont AM, la sortie de la porte PL1 passe au niveau haut et déclenche le circuit TP qui produit un signal pendant un intervalle de temps prédéterminé.

Ce signal, appliqué à l'entrée BLE de l'émetteur EM, place ce dernier dans un état de commande d'invalidation, ce qui a pour effet de provoquer l'émission par EM d'un signal de blocage à destination de l'autre système de protection.

Le passage au niveau haut du signal de sortie de la porte PL1 a également pour effet de bloquer la porte ET PL3 qui, quelles que soient les autres conditions, ne peut délivrer un signal de déclenchement DCL.

Le signal BLR représente le signal de blocage éventuellement reçu du système de protection associé à celui qui est représenté sur la figure 2.

L'apparition d'un signal de blocage BLR a pour effet de bloquer la porte ET PL3 qui, quelles que soient les autres conditions, ne peut délivrer un signal de déclenchement DCL.

Si, en revanche, l'un au moins des relais RD₁, RD₂, etc, délivre un signal aval AV, et si aucun ne délivre de signal amont AM, et si aucun signal de blocage BLR n'apparaît, alors la porte ET PL3 délivre un signal de déclenchement DCL.

Dans les systèmes à autorisation (figure 3), les sorties AM des différents relais parviennent à l'entrée d'une porte OU PL4 dont la sortie est reliée à une entrée inversée d'une porte ET PL5. La sortie de cette dernière est reliée à une entrée AUE de l'émetteur EM.

Les sorties AV des différents relais parviennent à l'entrée d'une porte logique OU PL6 dont la sortie est reliée à une entrée directe de la porte ET PL5.

La sortie de la porte ET PL5 est reliée à une entrée directe d'une porte ET PL7 dont une autre entrée directe reçoit un éventuel signal AUR en provenance du récepteur RC, ce signal AUR représentant le signal d'autorisation éventuellement reçu en provenance du système de protection associé à celui qui est représenté sur la figure 3.

Le fonctionnement du système de la figure 3 est le suivant :
Si l'un au moins des relais RD₁, RD₂, etc, délivre un signal amont AM, la sortie de la porte OU PL4 passe au niveau haut, ce qui a pour effet de bloquer la porte ET PL5, qui ne délivre donc aucun signal à l'entrée AUE de l'émetteur EM; ceci a pour effet de placer cet émetteur dans un état de commande d'invalidation, dans lequel il n'émet aucun signal d'autorisation au système de protection associé à celui de la figure 3.

Ceci a également pour effet que l'une des entrées au moins de la porte ET PL7 reste à l'état bas de sorte que, quelles que soient les autres conditions, cette dernière ne peut délivrer de signal de déclenchement DCL.

Si l'un au moins des relais RD₁, RD₂, etc, délivre un signal aval AV et si aucun ne délivre de signal amont AM, la sortie de la porte ET PL5 passe au niveau haut, ce qui a pour effet de placer l'émetteur EM dans son état de commande de validation, par activation de son entrée AUE, cet émetteur adressant alors un signal d'autorisation au système de protection associé à celui de la figure 3.

Si l'un au moins des relais délivré un signal aval AV et si aucun ne délivre de signal amont AM, et si le récepteur RC délivre un signal AUR représentant un signal d'autorisation émis par le système de protection associé à celui de la figure 3, alors la porte Et PL7 délivre un signal de déclenchement DCL.

Comme le comprendra aisément l'homme de l'art, l'application du dispositif de l'invention n'est pas limitée à la protection des lignes doubles, mais s'étend à la protection de toutes les configurations possibles de réseau, et notamment à la protection de portions de réseau en étoile.

En effet, dans le cas d'une étoile à N branches reliées en un point commun, il apparaît N.(N-I)/2 chemins électriques reliant deux à deux les extrémités de cette étoile, c'est-à-dire N.(N-I)/2 éléments de réseau à deux extrémités, dont chacun est susceptible d'être protégé par un dispositif conforme à l'invention.

## Revendications

1. Dispositif pour la protection d'un élément (EL1, EL2) de réseau électrique à deux extrémités, comprenant au moins :
- deux systèmes de protection (SP11-SP12, SP21-SP22) respectivement affectés à ces extrémités et dont chacun comprend d'une part au moins un relais directionnel (RD₁, RD₂) et d'autre part au moins un organe de transmission (EM/RC), comportant lui même un émetteur (EM) relié à ce relais directionnel, et
- un canal de transmission (CT1, CT2) reliant les deux organes de transmission, chaque relais directionnel (RD₁, RD₂) étant utilisé pour établir une discrimination entre d'éventuels défauts, dits "aval", qui sont susceptibles d'affecter ledit élément de réseau ou toute portion de réseau s'étendant au delà de l'extrémité de l'élément protégé qui est la plus éloignée de ce relais, et d'autres éventuels défauts dits "amont", et étant susceptible à cette fin d'adopter au moins un premier état, indiquant un défaut amont, et un second état, indiquant un défaut aval, chaque émetteur (EM) adoptant un état de commande de validation ou un état de commande d'invalidation selon l'état adapté par au moins un relais auquel il est relié, et chaque système de protection étant susceptible de délivrer un signal de déclenchement (DCL) pour effectuer une isolation électrique au moins partielle dudit élément de réseau, sauf s'il en est empêché par un état de commande d'invalidation de l'émetteur de l'autre, système caractérisé en ce que l'un au moins des systèmes de protection comprend, pour la détection du même défaut, des relais directionnels (RD1, RD2) d'au moins deux types reliés à un même émetteur par un circuit logique (CL) propre à placer cet émetteur dans son état de commande d'invalidation lorsque l'un au moins de ces relais se trouve dans un premier état, en ce que, dans le cas de dispositif de protection utilisant un principe de protection dit à autorisation, c'est-à-dire dans le cas où au moins un émetteur (EM) émet un signal d'autorisation (AUE) lorsqu'il adopte son état de commande de validation et s'abstient d'émettre un signal d'autorisation lorsqu'il adopte son état de commande d'invalidation, le circuit logique (CL) reliant lesdits relais de plusieurs types (RD1, RD2) à cet émetteur est propre à ne placer cet émetteur dans son état de commande de validation que si l'un au moins de ces relais est dans son second état et si, en même temps, aucun de ces relais n'est dans son premier état, et dans le cas de dispositif de protection utilisant un principe de protection dit à blocage, c'est-à-dire dans le cas où au moins un émetteur émet un signal de blocage (BLE) lorsqu'il adopte son état de commande d'invalidation et s'abstient d'émettre un signal de blocage (BLE) lorsqu'il adopte son état de commande de validation, le circuit logique (CL) reliant lesdits relais de plusieurs types (RD1, RD2) à cet émetteur (EM) comprend un circuit de temporisation (TP) propre à placer l'émetteur dans son état de commande d'invalidation pendant un intervalle de temps prédéterminé à compter du premier instant où l'un de ces relais se place dans son premier état, et en ce que le circuit logique de chaque système de protection à relais de plusieurs types comporte des moyens (PL3, PL7) pour élaborer ledit signal de déclenchement (DCL) si, à la fois, l'émetteur de l'autre système n'est pas en état de commande d'invalidation, si aucun des relais du système de protection concerné n'est dans son premier état, et si l'un au moins de ces relais est dans son second état.

2. Dispositif suivant la revendication précédente, dans lequel chaque relais (RD1, RD2) reçoit des signaux de mesure (VA, VB, VC, IA, IB, IC) représentatifs de l'état électrique dudit élément de réseau (EL1, EL2) à l'extrémité de celui-ci à laquelle ce relais est affecté, dans lequel chaque relais élabore une combinaison de ces signaux pour effectuer ladite discrimination entre les défauts amont et aval, et dans lequel chaque relais ne peut adopter son premier état si ladite combinaison de signaux est inférieure à un premier seuil, ni adopter son second état si cette même combinaison de signaux est inférieure à un second seuil, caractérisé en ce que ce second seuil est supérieur au premier seuil.

## Claims

1. Apparatus for protecting a two-ended section (EL1, EL2) of an electricity network, said apparatus comprising at least:
· two protection systems (SP11-SP12, SP21-SP22) assigned respectively to these ends, each system comprising at least one directional relay (RD1, RD2) and also at least one transmission unit (EM/RC) which itself includes a transmitter (EM) connected to that directional relay, and
· a transmission channel (CT1, CT2) linking the two transmission units, each directional relay (RD1, RD2) being used to provide discrimination between possible so-called "downstream" faults which are likely to affect said network section or any part of the network extending beyond that end of the protected section which is furthest from the relay, and other possible so-called "upstream" faults, the relay being capable for this purpose of adopting at least a first state, indicating an upstream fault, and a second state, indicating a downstream fault, each transmitter (EM) adopting an enabling or disabling control condition according to the state adopted by at least one relay to which it is connected, and each protection system being capable of providing a trip signal (DCL) to at least partially electrically isolate said network section, unless prevented from doing so by a disabling control condition of the transmitter of the other system, the system being characterized in that at least one of the protection systems comprises directional relays (RD1, RD2) of at least two types for detecting the same fault, these relays being connected to a common transmitter by a logic circuit (CL) arranged to place that transmitter in its disabling control condition when at least one of these relays is in its first state, and also characterized in that, in the case of a protection apparatus using the authorization principle of protection, i.e. where at least one transmitter (EM) emits an authorization signal (AUE) when it is in its enabling control condition and does not emit an authorization signal when it is in its disabling control condition, the logic circuit (CL) connecting said relays (RD1, RD2) of a plurality of types to that transmitter being arranged so that it only places the transmitter in its enabling control condition if at least one of the relays is in its second state and if, at the same time, none of the relays is in its first state, and in the case of a protection apparatus using the blocking principle of protection, i.e. where at least one transmitter emits a blocking signal (BLE) when it is in its disabling control condition and does not emit a blocking signal (BLE) when it is in its enabling control condition, the logic circuit connecting said relays (RD1, RD2) of a plurality of types to that transmitter (EM) comprises a delay circuit (TP) which is arranged to place the transmitter in its disabling control condition for a predetermined time interval starting from the first time at which one of said relays takes up its first state, and in that the logic circuit of each protection system of a plurality of types of relay comprises means (PL3, PL7) for processing said trip signal (DCL) if, at one and the same time, the transmitter of the other system is not in the disabling control condition, none of the relays of the protection system concerned are in their first state and at least one of said relays is in its second state.

2. Apparatus according to claim 1, in which each relay (RD1, RD2) receives measuring signals (VA, VB, VC, IA, IB, IC) indicative of the electrical state of said section (EL1, EL2) of the network at the end of the section to which that relay is assigned, and in which each relay processes a combination of these signals to effect said discrimination between upstream and downstream faults, and in which each relay can adopt its first state only if said combination of signals is below a first threshold, and can adopt its second state only if that same combination of signals is below a second threshold, the apparatus being characterized in that this second threshold is above the first threshold.

## Patentansprüche

1. Einrichtung zum Schutz eines Elements (EL₁, EL₂) eines elektrischen Netzes mit zwei Enden, die mindestens aufweist:
- zwei Schutzsysteme (SP₁₁-SP₁₂, SP₂₁-SP₂₂), die je einem dieser Enden zugeordnet sind und je einerseits mindestens ein Richtungsrelais (RD₁, RD₂) und andererseits mindestens ein Übertragungsorgan (EM/RC) aufweisen, das seinerseits einen an dieses Richtungsrelais angeschlossenen Sender (EM) aufweist, und
- einen Übertragungskanal (CT₁, CT₂), der die beiden Übertragungsorgane verbindet, wobei jedes Richtungsrelais (RD₁, RD₂) zur Herbeiführung einer Unterscheidung zwischen möglichen "hinteren" Fehlern, die das Netzelement oder den gesamten Netzabschnitt betreffen können, der sich jenseits des Endes des am weitesten vom Relais entfernten geschützten Elements erstreckt, und möglichen "vorderen" Fehlern verwendet wird, wozu jedes Relais mindestens einen ersten Zustand, der einen vorderen Fehler anzeigt, und einen zweiten Zustand annehmen kann, der einen hinteren Fehler anzeigt, wobei jeder Sender (EM) gemäß dem Zustand, den mindestens ein Relais annimmt, an das er angeschlossen ist, einen Zulässigkeitsbefehlszustand oder einen Unzulässigkeitsbefehlszustand annimmt und wobei jedes Schutzsystem einen Abschaltbefehl (DCL) liefern kann, um eine mindestens partielle elektrische Abtrennung des betreffenden Netzelements herbeizuführen, es sei denn, daß es daran durch einen Unzulässigkeitsbefehlszustand des Senders des anderen Systems gehindert wird, dadurch gekennzeichnet, daß mindestens eines der Schutzsysteme zur Erfassung desselben Fehlers Richtungsrelais (RD₁, RD₂) mindestens zweier Typen aufweist, die durch eine Logikschaltung (CL) an einen gemeinsamen Sender angeschlossen sind, wobei die Schaltung diesen Sender in seinen Unzulässigkeitsbefehlszustand versetzen kann, wenn sich mindestens eines der Relais in einem ersten Zustand befindet, und daß, wenn die Schutzeinrichtung ein freigabegebundenes Schutzprinzip anwendet, d.h., daß mindestens ein Sender (EM) ein Freigabesignal (AUE) aussendet, wenn er seinen Zulässigkeitsbefehlszustand annimmt, und kein Freigabesignal aussendet, wenn er seinen Unzulässigkeitsbefehlszustand annimmt, die die Relais verschiedener Typen (RD₁, RD₂) mit dem betreffenden Sender in Verbindung bringende Logikschaltung (CL) in der Lage ist, den betreffenden Sender nur dann in seinen Zulässigkeitsbefehlszustand zu versetzen, wenn sich mindestens eines der Relais in seinem zweiten Zustand befindet und wenn sich gleichzeitig keines dieser Relais in seinem ersten Zustand befindet und daß, wenn die Schutzeinrichtung ein blockierungsgebundenes Schutzprinzip anwendet, d.h., daß mindestens ein Sender ein Blockiersignal (BLE) aussendet, wenn er seinen Unzulässigkeitsbefehlszustand annimmt und kein Blockiersignal (BLE) aussendet, wenn er seinen Zulässigkeitsbefehlszustand annimmt, die die Relais mehrerer Typen (RD₁, RD₂) mit diesem Sender (EM) verbindende Logikschaltung (CL) eine Verzögerungsschaltung (TP) aufweist, die in der Lage ist, den Sender während eines vorbestimmten Zeitintervalls beginnend mit dem ersten Zeitpunkt, in dem eines der Relais in seinen ersten Zustand übergeht, in seinen Unzulässigkeitsbefehlszustand versetzt und daß die Logikschaltung jedes Schutzsystems mit Relais mehrerer Typen Mittel (PL3, PL7) zum Erzeugen des Abschaltsignals (DCL) aufweist, wenn sich gleichzeitig der Sender des anderen Systems nicht im Unzulässigkeitsbefehlszustand befindet, wenn sich weiter keines der Relais des betroffenen Schutzsystems in seinem ersten Zustand befindet, und wenn sich schließlich mindestens eines dieser Relais in seinem zweiten Zustand befindet.

2. Einrichtung gemäß dem vorhergehenden Anspruch, bei der jedes Relais (RD₁, RD₂) Meßsignale (V_{A}, V_{B}, V_{C}, I_{A}, I_{B}, I_{C}) empfängt, die den elektrischen Zustand des betreffenden Netzelements (EL₁, EL₂) an demjenigen Ende desselben darstellen, dem das betreffende Relais zugeordnet ist, wobei jedes Relais eine Kombination dieser Signale zur Durchführung der Unterscheidung zwischen hinteren und vorderen Fehlern erarbeitet, und wobei jedes Relais weder seinen ersten Zustand annehmen kann, falls die Signalkombination unter einem ersten Schwellenwert liegt, noch seinen zweiten Zustand annehmen kann, falls die gleiche Signalkombination unter einem zweiten Schwellenwert liegt, dadurch gekennzeichnet, daß der zweite Schwellenwert größer als der erste Schwellenwert ist.
